# EUROPEAN PATENT APPLICATION

(11) **EP 3 043 601 A1**
(43) Date of publication of application: **13.07.2016**
(21) Application number: 13894353.5
(22) Date of filing: 26.09.2013
(51) Int. Cl.: H04W 48/12

(54) **UPLINK INFORMATION SENDING METHOD AND APPARATUS, RECEIVING METHOD AND APPARATUS, AND COMMUNICATIONS SYSTEM**

(71) Applicant: Huawei Technologies Co., Ltd., Longgang District Shenzhen, Guangdong 518129 (CN)
(72) Inventor: LV, Yongxia, Shenzhen Guangdong518129 (CN)
(74) Representative: Pfenning, Meinig & Partner mbB
(86) International application number: PCT/CN2013/084365
(87) International publication number: WO 2015/042843

(57) **Abstract**

The present invention relates to an uplink information sending method and apparatus, receiving method and apparatus, and communications system. The uplink information sending method includes: receiving downlink control information DCI and a time division duplexing TDD uplink-downlink configuration that are sent by a base station; determining, according to the TDD uplink-downlink configuration, that an uplink index UL Index field or a downlink assignment index DAI field exists in the DCI, where the TDD uplink-downlink configuration includes a configuration in a physical downlink control channel PDCCH or an uplink reference configuration; and sending uplink information corresponding to the DCI to the base station according to the UL Index field that exists and in an uplink subframe corresponding to the UL Index field that exists; or sending HARQ-ACK information corresponding to the DAI field that exists to the base station according to the DAI field that exists. The present invention can ensure that the UL Index field or the DAI field functions normally, and further can reduce an increase in downlink control signaling overheads or uplink control signaling overheads and improve a system capacity.

## Description

### TECHNICAL FIELD

The present invention relates to the field of communications technologies, and in particular, to an uplink information sending method and apparatus, receiving method and apparatus, and communications system.

### BACKGROUND

A Long Term Evolution (Long Term Evolution, LTE) system supports a time division duplexing (Time Division Duplexing, TDD) mode, that is, an uplink (Uplink, UL) and a downlink (Downlink, DL) use different time slots having a same frequency. In an LTE TDD system, an uplink-downlink configuration (Uplink-Downlink Configuration) may be configured semi-statically according to a service type, so as to meet different uplink-downlink asymmetrical service requirements. Before the LTE TDD R12 version, the uplink-downlink configurations are all carried in a system information block 1 (System Information Block 1, SIB1) message and are notified to user equipment (User Equipment, UE). When a used uplink-downlink configuration is configured semi-statically, the configuration is changed every 640 ms (ms) at most, resulting in that a current uplink-downlink configuration does not match an instant uplink-downlink service volume, and therefore resources cannot be used effectively, which is especially serious for a cell with less users. Therefore, in a new version system, a TDD uplink-downlink configuration may be dynamically changed, for example, the TDD uplink-downlink configuration is changed every 10 ms to 40 ms. This function is referred to as eIMTA.

There are seven configurations in an existing LTE TDD system. For details, refer to the following Table 1, where D represents downlink, U represents uplink, and S represents a special subframe. The special subframe includes a downlink pilot time slot (Downlink Pilot Time Slot, DWPTS), a guard period (Guard Period, GP), and an uplink pilot time slot (Uplink Pilot Time Slot, UPPTS).

**Table 1: TDD uplink-downlink configuration**

| TDD uplink-downlink configuration number | Downlink-to-uplink switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

Currently, in the LTE TDD system, only when a TDD configuration is 0, a field whose name is UL index (UL Index) in DCI (Downlink Control Information Format, downlink control information format) format0/4 of an uplink grant (UL GRANT) exists, where the field is two bits and represents a scheduled subframe. When a most significant bit of the UL Index field in the DCI format0/4 of the UL GRANT is set to 1, a PUSCH subframe scheduled by the UL GRANT is n + k, where a value of k is shown in Table 2. When a least significant bit of the UL Index field in the DCI format0/4 is set to 1, the PUSCH subframe scheduled by the UL GRANT is n + 7. When the two bits of the UL Index are both set to 1, one piece of DCI in one downlink subframe can schedule two uplink subframes at the same time, so as to reduce downlink control signaling overheads.

**Table 2: Timing relationship between a PDCCH or an ePDCCH and a PUSCH (k2 for TDD uplink-downlink configurations 0 to 6)**

| TDD uplink-downlink configuration number | Subframe number n2 | | | | | | | | | |
|---|---|---|---|---|---|---|---|---|---|---|
| | **0** | **1** | **2** | **3** | **4** | **5** | **6** | **7** | **8** | **9** |
| 0 | 4 | 6 | | | | 4 | 6 | | | |
| 1 | | 6 | | | 4 | | 6 | | | 4 |
| 2 | | | | 4 | | | | | 4 | |
| 3 | 4 | | | | | | | | 4 | 4 |
| 4 | | | | | | | | | 4 | 4 |
| 5 | | | | | | | | | 4 | |
| 6 | 7 | 7 | | | | 7 | 7 | | | 5 |

Only when TDD configurations are 1 to 6, a field whose name is downlink assignment index (DAI, Downlink Assignment Index) in the DCI format0/4 of the uplink grant (UL GRANT) exists, where the field is also two bits. The DAI indicates a total quantity of the PDSCHs and downlink SPS release signaling that are transmitted in an HARQ-ACK bundling subframe set, while bits of the HARQ-ACK information carried on a PUSCH scheduled by the UL GRANT are determined according to a value of the DAI carried in the UL GRANT. For example, when a value of the DAI is larger, there are more bits in the HARQ-ACK information fed back on the PUSCH, and more resources on the PUSCH are occupied by the HARQ-ACK information.

For UE before the LTE TDD R12, it is determined, according to a TDD configuration notified in the SIB1, whether the UL INDEX or the DAI field exists. In addition, the TDD configuration notified in the SIB1 is set mainly for a backward compatibility of the UE before the LTE TDD R12, and is possibly different from an actual TDD uplink-downlink subframe configuration in the current system. For a user, supporting an eIMTA function, of the LTE TDD R12 and the later versions, if it is determined, according to the TDD uplink-downlink configuration notified in the SIB1, whether the UL INDEX field or the DAI field exists, it may be inconsistent with an actual scheduling status, which results in that the UL INDEX or the DAI field cannot function normally, and therefore, increases downlink control signaling overheads or uplink control signaling overheads.

### SUMMARY

### Technical problem

In view of this, a technical problem to be resolved in the present invention is to provide an uplink information sending method and apparatus, receiving method and apparatus, and communications system, so as to resolve a problem that because a TDD uplink-downlink configuration delivered by using an SIB is inconsistent with an actual configuration, a UL Index field or a DAI field cannot function normally, and further, downlink control signaling overheads or uplink control signaling overheads are increased.

### Solution

In order to resolve the foregoing technical problem, according to an embodiment of the present invention, an uplink information sending method is provided, including:
receiving downlink control information DCI and a time division duplexing TDD uplink-downlink configuration that are sent by a base station;
determining, according to the TDD uplink-downlink configuration, that an uplink index UL Index field or a downlink assignment index DAI field exists in the DCI, where the TDD uplink-downlink configuration includes a configuration in a physical downlink control channel PDCCH or an uplink reference configuration; and
sending uplink information corresponding to the DCI to the base station according to the UL Index field that exists and in an uplink subframe corresponding to the UL Index field that exists; or sending HARQ-ACK information corresponding to the DAI field that exists to the base station according to the DAI field that exists.

For the uplink information sending method, in a possible implementation manner, the determining, according to the TDD uplink-downlink configuration, that a UL Index field or a DAI field exists in the DCI specifically includes: when the configuration in the PDCCH is any one of TDD configurations 0, 3, and 6, determining that the UL Index field exists in the DCI.

For the uplink information sending method, in a possible implementation manner, the determining, according to the TDD uplink-downlink configuration, that a UL Index field or a DAI field exists in the DCI specifically includes: when the configuration in the PDCCH is any one of TDD configurations 1, 2, 4, and 5, determining that the DAI field exists in the DCI.

For the uplink information sending method, in a possible implementation manner, the determining, according to the TDD uplink-downlink configuration, that a UL Index field or a DAI field exists in the DCI specifically includes: when the uplink reference configuration is a TDD configuration 0, determining that the UL Index field exists in the DCI.

For the uplink information sending method, in a possible implementation manner, the determining, according to the TDD uplink-downlink configuration, that a UL Index field or a DAI field exists in the DCI specifically includes: when the uplink reference configuration is any one of TDD configurations 1, 2, 3, 4, 5, and 6, determining that the DAI field exists in the DCI.

For the uplink information sending method, in a possible implementation manner, the receiving a TDD uplink-downlink configuration sent by a base station specifically includes:
receiving the uplink reference configuration sent by the base station and carried in radio resource control RRC signaling or system information block SIB1 signaling.

For the uplink information sending method, in a possible implementation manner, the method further includes:
receiving a downlink reference configuration sent by the base station; and
sending, to the base station in the uplink subframe corresponding to the UL Index field that exists, HARQ-ACK information corresponding to a maximum value of a quantity of subframes that corresponds to the downlink reference configuration and that needs to be fed back.

For the uplink information sending method, in a possible implementation manner, the method further includes:
when the uplink reference configuration is a TDD configuration 0, determining that an uplink subframe corresponding to the DCI is a corresponding uplink subframe that is obtained when the TDD configuration is 0 and when an LSB of the UL Index field is set to 1.

For the uplink information sending method, in a possible implementation manner, the determining, according to the TDD uplink-downlink configuration, that a UL Index field or a DAI field exists in the DCI further includes:
determining an effect-taking time of the TDD uplink-downlink configuration; and
the determining, according to the TDD uplink-downlink configuration, that a UL Index field or a DAI field exists in the DCI specifically includes:
   determining, according to the effective TDD uplink-downlink configuration, that the UL Index field or the DAI field exists in the DCI.

In order to resolve the foregoing technical problem, according to another embodiment of the present invention, an uplink information receiving method is provided, including:
sending DCI and a TDD uplink-downlink configuration to UE;
determining, according to the TDD uplink-downlink configuration, that a UL Index field or a DAI field exists in the DCI, where the TDD uplink-downlink configuration includes a configuration in a PDCCH or an uplink reference configuration; and
receiving, according to the UL Index field that exists and in an uplink subframe corresponding to the UL Index subframe that exists, uplink information sent by the UE and corresponding to the DCI; or receiving, according to the DAI field that exists, HARQ-ACK information sent by the UE and corresponding to the DAI field that exists.

For the uplink information receiving method, in a possible implementation manner, the determining, according to the TDD uplink-downlink configuration, that a UL Index field or a DAI field exists in the DCI specifically includes: when the configuration in the PDCCH is any one of TDD configurations 0, 3, and 6, determining that the UL Index field exists in the DCI.

For the uplink information receiving method, in a possible implementation manner, the determining, by a base station according to the TDD uplink-downlink configuration, that a UL Index field or a DAI field exists in the DCI specifically includes: when the configuration in the PDCCH is any one of TDD configurations 1, 2, 4, and 5, determining, by the UE, that the DAI field exists in the DCI.

For the uplink information receiving method, in a possible implementation manner, the determining, according to the TDD uplink-downlink configuration, that a UL Index field or a DAI field exists in the DCI specifically includes: when the uplink reference configuration is a TDD configuration 0, determining that the UL Index field exists in the DCI.

For the uplink information receiving method, in a possible implementation manner, the determining, according to the TDD uplink-downlink configuration, that a UL Index field or a DAI field exists in the DCI specifically includes: when the uplink reference configuration is any one of TDD configurations 1, 2, 3, 4, 5, and 6, determining that the DAI field exists in the DCI.

For the uplink information receiving method, in a possible implementation manner, the sending DCI and a TDD uplink-downlink configuration to UE specifically includes:
adding the uplink reference configuration to RRC signaling or SIB1 signaling and sending the RRC signaling or the SIB signaling to the base station.

For the uplink information receiving method, in a possible implementation manner, the method further includes:
sending a downlink reference configuration to the UE; and
receiving, in the uplink subframe corresponding to the UL Index field that exists, HARQ-ACK information corresponding to a maximum value of a quantity of subframes that corresponds to the downlink reference configuration sent by the UE and that needs to be fed back.

For the uplink information receiving method, in a possible implementation manner, the determining that the DAI field exists in the DCI further includes:
when the uplink reference configuration is a TDD configuration 0, determining that an uplink subframe corresponding to the DCI is a corresponding uplink subframe that is obtained when the TDD configuration is 0 and when an LSB of the UL Index is set to 1.

For the uplink information receiving method, in a possible implementation manner, the determining, according to the TDD uplink-downlink configuration, that a UL Index field or a DAI field exists in the DCI further includes:
determining an effect-taking time of the TDD uplink-downlink configuration; and
the determining, according to the TDD uplink-downlink configuration, that a UL Index field or a DAI field exists in the DCI specifically includes:
   determining, according to the effective TDD uplink-downlink configuration, that the UL Index field or the DAI field exists in the DCI.

In order to resolve the foregoing technical problem, according to another embodiment of the present invention, an uplink information sending apparatus is provided, including:
a first receiving module, configured to receive DCI and a TDD uplink-downlink configuration that are sent by a base station;
a first determining module, connected to the first receiving module and configured to determine, according to the TDD uplink-downlink configuration, that a UL Index field or a DAI field exists in the DCI, where the TDD uplink-downlink configuration includes a configuration in a PDCCH or an uplink reference configuration; and
a first sending module, connected to the first determining module and configured to: send uplink information corresponding to the DCI to the base station according to the UL Index field or DAI field that exists and in an uplink subframe corresponding to the UL Index field that exists; or send HARQ-ACK information corresponding to the DAI field that exists to the base station according to the DAI field that exists.

For the uplink information sending apparatus, in a possible implementation manner, the first determining module is specifically configured to: when the configuration in the PDCCH is any one of TDD configurations 0, 3, and 6, determine that the UL Index field exists in the DCI.

For the uplink information sending apparatus, in a possible implementation manner, the first determining module is specifically configured to: when the configuration in the PDCCH is any one of TDD configurations 1, 2, 4, and 5, determine that the DAI field exists in the DCI.

For the uplink information sending apparatus, in a possible implementation manner, the first determining module is specifically configured to: when the uplink reference configuration is a TDD configuration 0, determine that the UL Index field exists in the DCI.

For the uplink information sending apparatus, in a possible implementation manner, the first determining module is specifically configured to: when the uplink reference configuration is any one of TDD configurations 1, 2, 3, 4, 5, and 6, determine that the DAI field exists in the DCI.

For the uplink information sending apparatus, in a possible implementation manner, the first receiving module is further configured to:
receive the uplink reference configuration sent by the base station and carried in RRC signaling or SIB1 signaling.

For the uplink information sending apparatus, in a possible implementation manner, the first receiving module is further configured to receive a downlink reference configuration sent by the base station; and
the first sending module is further configured to send, to the base station in the uplink subframe corresponding to the UL Index field that exists, HARQ-ACK information corresponding to a maximum value of a quantity of subframes that corresponds to the downlink reference configuration and that needs to be fed back.

For the uplink information sending apparatus, in a possible implementation manner, the apparatus further includes: a first subframe determining module, configured to: when the uplink reference configuration is a TDD configuration 0, determine that an uplink subframe corresponding to the DCI is a corresponding uplink subframe that is obtained when the TDD configuration is 0 and when an LSB of the UL Index field is set to 1.

For the uplink information sending apparatus, in a possible implementation manner, the first determining module is further configured to determine an effect-taking time of the TDD uplink-downlink configuration sent by the base station; and determine, according to the effective TDD uplink-downlink configuration, that the UL Index field or the DAI field exists in the DCI.

In order to resolve the foregoing technical problem, according to another embodiment of the present invention, an uplink information receiving apparatus is provided, including:
a second sending module, configured to send DCI and a TDD uplink-downlink configuration to UE;
a second determining module, connected to the second sending module and configured to determine, according to the TDD uplink-downlink configuration, that a UL Index field or a DAI field exists in the DCI, where the TDD uplink-downlink configuration includes a configuration in a PDCCH or an uplink reference configuration; and
a second receiving module, connected to the second determining module and configured to receive, in an uplink subframe corresponding to the UL Index field that exists, uplink information sent by the UE and corresponding to the DCI; or receive, according to the DAI field that exists, HARQ-ACK information sent by the UE and corresponding to the DAI field that exists.

For the uplink information receiving apparatus, in a possible implementation manner, the second determining module is specifically configured to: when the configuration in the PDCCH is any one of TDD configurations 0, 3, and 6, determine that the UL Index field exists in the DCI.

For the uplink information receiving apparatus, in a possible implementation manner, the second determining module is specifically configured to: when the configuration in the PDCCH is any one of TDD configurations 1, 2, 4, and 5, determine, by the UE, that the DAI field exists in the DCI.

For the uplink information receiving apparatus, in a possible implementation manner, the second determining module is specifically configured to: when the uplink reference configuration is a TDD configuration 0, determine that the UL Index field exists in the DCI.

For the uplink information receiving apparatus, in a possible implementation manner, the second determining module is specifically configured to: when the uplink reference configuration is any one of TDD configurations 1, 2, 3, 4, 5, and 6, determine that the DAI field exists in the DCI.

For the uplink information receiving apparatus, in a possible implementation manner, the second sending module is further configured to add the uplink reference configuration to RRC signaling or SIB signaling and send the RRC signaling or the SIB1 signaling to the base station.

For the uplink information receiving apparatus, in a possible implementation manner, the second sending module is further configured to send a downlink reference configuration to the UE; and
the second receiving module is further configured to receive, in the uplink subframe corresponding to the UL Index field that exists, HARQ-ACK information corresponding to a maximum value of a quantity of subframes that corresponds to the downlink reference configuration sent by the UE and that needs to be fed back.

For the uplink information receiving apparatus, in a possible implementation manner, the apparatus further includes: a second subframe determining module, configured to: when the uplink reference configuration is a TDD configuration 0, determine that an uplink subframe corresponding to the DCI is a corresponding uplink subframe that is obtained when the TDD configuration is 0 and when an LSB of the UL Index is set to 1.

For the uplink information receiving apparatus, in a possible implementation manner, the second determining module is further configured to determine an effect-taking time of the TDD uplink-downlink configuration; and determine, according to the effective TDD uplink-downlink configuration, that the UL Index field or the DAI field exists in the DCI.

In order to resolve the foregoing technical problems, according to another embodiment of the present invention, an uplink information communications system is provided, including: the foregoing uplink information sending apparatus and the foregoing uplink information receiving apparatus.

### Beneficial effects

In an uplink information sending method and apparatus, receiving method and apparatus, and communications system provided in the embodiments of the present invention, it is determined, according to TDD configuration information, whether a UL Index field or a DAI field exists in DAI, which can ensure that the UL Index field or the DAI field functions normally, and further can reduce an increase in downlink control signaling overheads or uplink control signaling overheads and improve a system capacity.

Other features and aspects of the present invention become clearer according to the following detailed description of exemplary embodiments with reference to accompanying drawings.

### BRIEF DESCRIPTION OF DRAWINGS

Accompanying drawings included in the specification and constituting a part of the specification show exemplary embodiments, features, and aspects of the present invention together with the specification, and are used to explain a principle of the present invention.
FIG. 1 is a flowchart of an uplink information sending method according to an embodiment of the present invention;
FIG. 2 is a flowchart of an uplink information sending method and receiving method according to another embodiment of the present invention;
FIG. 3 is a flowchart of an uplink information sending method and receiving method according to still another embodiment of the present invention;
FIG. 4 is a flowchart of an uplink information sending method and receiving method according to yet another embodiment of the present invention;
FIG. 5 is a schematic structural diagram of an uplink information sending apparatus according to still another embodiment of the present invention;
FIG. 6 is a schematic structural diagram of an uplink information receiving apparatus according to a further embodiment of the present invention;
FIG. 7 is a schematic structural diagram of an uplink information communications system according to a further embodiment of the present invention; and
FIG. 8 is a structural block diagram of a network device according to another embodiment of the present invention.

### DESCRIPTION OF EMBODIMENTS

The following describes various exemplary embodiments, features, and aspects of the present invention in detail with reference accompanying drawings. Same reference numerals in the accompanying drawings designate elements that have same or similar functions. Various aspects of the embodiments illustrated in the accompanying drawings may not be necessarily drawn to scale, unless otherwise specified.

The specific term "exemplary" herein means "used as an example or embodiment or illustration". Any embodiment described as "exemplary" is not necessarily explained as being superior to or better than other embodiments.

In addition, for better description of the present invention, many specific details are provided in the following specific implementation manners. A person of ordinary skill in the art should understand that the present invention may also be implemented without some specific details. In some other embodiments, methods, means, components, and circuits known by a person skilled in the art are not described in detail for the convenience of highlighting the theme of the present invention.

### Embodiment 1

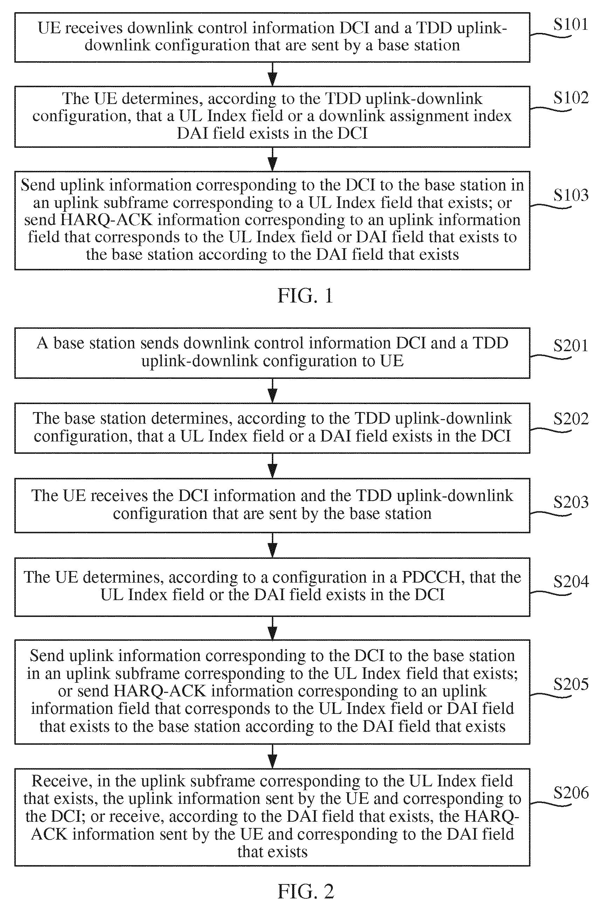

As shown in FIG. 1, FIG. 1 is a flowchart of an uplink information sending method according to an embodiment of the present invention. The method specifically includes:
Step S101: UE receives downlink control information DCI and a TDD uplink-downlink configuration that are sent by a base station.

Step S102: The UE determines, according to the TDD uplink-downlink configuration, that a UL Index field or a downlink assignment index DAI field exists in the DCI, where the TDD uplink-downlink configuration includes a configuration in a physical downlink control channel (Physical Downlink Control Channel, PDCCH) or an uplink reference configuration.

A format of the physical downlink control channel PDCCH may be any one of a DCI format 1c, a DCI format 3/3A, and a DCI format 1A, or certainly may be a new format, which is not limited in the present invention.

Step S103: The UE sends uplink information corresponding to the UL Index field or DAI field that exists to the base station according to the UL Index field or DAI field that exists and the TDD uplink-downlink configuration.

### Embodiment 2

LTE TDD downlink transmission in this embodiment supports a hybrid automatic repeat request (Hybrid Automatic Repeat Request, HARQ) technology. A base station sends a physical downlink shared channel (Physical Downlink Share Channel, PDSCH) or downlink semi-persistent scheduling release (Semi-Persistent Scheduling Release, SPS Release) signaling to UE in a subframe *n - k,* and the UE sends HARQ-acknowledge (HARQ-Acknowledge, HARQ-ACK) information of the PDSCH or the downlink SPS release signaling to the base station in an uplink subframe *n* , where *k* ε *K* , and *K* is a downlink association set (Downlink Association Set), which is a set {*k*₀, *k*₁,...,*k*_{*M-*1}} including *M* elements. A downlink subframe set {*n-k*_{0,}*n-k*₁*,...,n-k*_{*M-*1}} is referred to as an HARQ-ACK bundling subframe set, and a specific value is shown in Table 3. After receiving the HARQ-ACK information, the base station can know whether the UE correctly receives the PDSCH or the downlink SPS release signaling. For example, when an uplink-downlink configuration is 2, for a PUSCH sent in a subframe 2, HARQ-ACK information of downlink association subframes {8, 7, 4, 6} needs to be fed back. In addition, as stipulated in standards, if the UE needs to send a PUSCH in the uplink subframe *n*, the HARQ-ACK information is carried in the PUSCH; otherwise the HARQ-ACK information is carried in a PUCCH (Physical Uplink Control Channel, physical uplink control channel).

**Table 3: Downlink association set index K : {k₀,k₁, ..., k_{M-1}}**

| Uplink-downlink configuration | Subframe number *n* | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | - | 4 | - | - | 6 | - | 4 |
| 1 | - | - | 7, 6 | 4 | - | - | - | 7, 6 | 4 | - |
| 2 | - | - | 8, 7, 4, 6 | - | - | - | - | 8, 7, 4, 6 | - | - |
| 3 | - | - | 7, 6, 11 | 6, 5 | 5, 4 | - | - | - | - | - |
| 4 | - | - | 12, 8, 7, 11 | 6, 5, 4, 7 | - | - | - | - | - | - |
| 5 | - | - | 13, 12, 9, 8, 7, 5, 4, 11, 6 | - | - | - | - | - | - | - |
| 6 | - | - | 7 | 7 | 5 | - | - | 7 | 7 | - |

When a most significant bit of a UL Index field in a DCI format0/4 of a UL GRANT is set to 1, a PUSCH subframe scheduled by the UL GRANT is n + k, where a value of k is shown in Table 2. When a least significant bit of the UL Index field in the DCI format0/4 is set to 1, the PUSCH subframe scheduled by the UL GRANT is n + 7.

As shown in FIG. 2, FIG. 2 is a flowchart of an uplink information sending method and receiving method according to another embodiment of the present invention. The method mainly includes:
Step S201: A base station sends downlink control information DCI and a TDD uplink-downlink configuration to UE.

Step S202: The base station determines, according to the TDD uplink-downlink configuration, that a UL Index field or a DAI field exists in the DCI.

The TDD uplink-downlink configuration includes a configuration in a PDCCH and an uplink reference configuration, where the configuration in the PDCCH is carried in information notified by using the PDCCH and is sent to the UE, and the uplink reference configuration is carried in radio resource control (Radio Resource Control, RRC) signaling and is delivered. This embodiment uses an example in which a field is determined according to the configuration in the PDCCH.

Step S203: The UE receives the DCI information and the TDD uplink-downlink configuration that are sent by the base station.

The TDD configuration includes the configuration in the PDCCH and the uplink reference configuration.

Step S204: The UE determines, according to the TDD uplink-downlink configuration, that the UL Index field or the DAI field exists in the DCI.

Step S205: The UE sends uplink information corresponding to the UL Index field or DAI field that exists to the base station according to the UL Index field or DAI field that exists.

Step S206: The base station schedules a subframe corresponding to the received uplink information.

Specifically, the base station receives, in an uplink subframe corresponding to the UL Index field that exists, uplink information sent by the UE and corresponding to the DCI; or receives, according to the DAI field that exists, HARQ-ACK information sent by the UE and corresponding to the DAI field that exists.

For step S204, the performing, by the UE, determining according to the TDD uplink-downlink configuration specifically includes: if the configuration in the PDCCH is any one of TDD configurations 0, 3, and 6, determining, by the UE, that the UL Index field exists in the DCI; or if the configuration in the PDCCH is any one of TDD configurations 1, 2, 4, and 5, determining, by the UE, that the DAI field exists in the DCI.

Preferably, after the received configuration in the PDCCH takes effect, the UE determines the UL Index field or the DCI field. Before step S204, the method further includes:
sending, by the base station, signaling that includes an effect-taking time of the configuration in the PDCCH to the UE, where the signaling may be higher layer signaling, such as RRC signaling; or may be physical layer signaling, such as information notified by using the PDCCH. In this case, the effect-taking time and the TDD uplink-downlink configuration may be together delivered to the UE by using the information notified by using the PDCCH.

The UE determines, according to the effect-taking time of the configuration in the PDCCH, whether the configuration in the PDCCH takes effect, and performs step S204 when and after the configuration takes effect.

Assuming that the effect-taking time of the configuration in the PDCCH is a subframe N, the UE determines, in a subframe N + k and subsequent subframes, whether the UL Index field or the DAI field exists in the DCI, where K ≧ 0. A specific value of K may be set by a system or may be formulated according to a standard (for example, K = 0, 1, or 2), or is notified by the base station to the UE by using signaling.

For step 205, specifically, the UE determines an HARQ timing relationship of uplink data according to the uplink reference configuration, and determines, according to the determined timing relationship, a position of an uplink subframe that needs to be scheduled.

If it is determined that the UL Index field exists, step S205 is specifically: sending the uplink information corresponding to the DCI to the base station in the uplink subframe corresponding to the UL Index field that exists.

Further, this embodiment further includes a step of receiving, by the UE, a downlink reference configuration sent by the base station, where the downlink reference configuration may be carried in RRC signaling and sent to the UE, and then, the UE further needs to send, to the base station, HARQ-ACK information corresponding to a maximum value of a quantity of subframes that corresponds to the downlink reference configuration and that needs to be fed back.

If it is determined that the DAI field exists, step S205 is specifically: sending, by the UE, the HARQ-ACK information corresponding to the DAI field that exists to the base station.

If it is determined that the DAI field exists, when the uplink reference configuration is a TDD configuration 0, the UE further determines that an uplink subframe corresponding to the DCI field is a corresponding uplink subframe that is obtained when the TDD configuration is 0 and when an LSB of the UL Index field is set to 1.

The uplink reference configuration and the downlink reference configuration are introduced in an LTE TDD system in this embodiment. No matter how an actually-used uplink-downlink configuration changes, only an HARQ timing relationship of the uplink reference configuration is used as an HARQ timing relationship of uplink data, and only an HARQ timing relationship of the downlink reference configuration is used as an HARQ timing relationship of downlink data. The HARQ timing relationship of the uplink reference configuration refers to an HARQ timing relationship corresponding to the uplink data in the uplink-downlink configuration, and the HARQ timing relationship of the downlink reference configuration refers to an HARQ timing relationship corresponding to a downlink subframe (including a downlink part in a special subframe) in the uplink-downlink configuration.

An effective subframe may be defined as a subframe that carries data. For example, a special subframe that may carry a downlink subframe may be considered as an effective downlink subframe.

A timing relationship between a PDCCH or an **ePDCCH** carrying uplink DCI and a corresponding physical uplink shared channel may be explained as that: assuming that a subframe in which the PDCCH or the ePDCCH carrying the uplink DCI is located is n2, a subframe in which the corresponding physical uplink shared channel is located is n2 + k2, where specifically, k2 may be obtained by searching Table 2. For example, when the TDD uplink-downlink configuration is 0, for a subframe 0, k2 is 4, and the subframe in which the corresponding physical uplink shared channel is located is 4; and for a subframe 1, k2 is 6, the subframe in which the corresponding physical uplink shared channel is located is 7. In addition, if the subframe configuration is 0, it can be known by searching Table 1 that there are six uplink subframes, more than downlink subframes whose quantity is four. In this case, a UL Index in one uplink grant may be used to simultaneously schedule resources of two uplink subframes for same UE. Two bits in the UL Index field in the DCI format0 are used to represent a position of a scheduled subframe. When a most significant bit of the UL Index field in the DCI format0/4 is set to 1, a PUSCH subframe corresponding to the DCI format0/4 is n + k2, where a value of k2 is also shown in Table 2. When a least significant bit of the UL Index field in the DCI format0 is set to 1, the PUSCH subframe corresponding to the DCI format0/4 is n + 7.

According to the method provided in this embodiment, a UL Index field and a DAI field can both function normally. The UL Index may be used to schedule two uplink subframes in one piece of DCI in a downlink subframe, which can reduce PDCCH overheads, and the DAI can save resources occupied by the HARQ-ACK on the PUSCH.

The following explains and describes, according to a configuration, whether the UL Index field or the DAI field exists.

Scenario 1: How to send HARQ-ACK information on a PUSCH if the UL Index field exists and the DAI field does not exist.

In a first case, an uplink reference configuration is a TDD configuration 0, and a used configuration is a TDD configuration 6. For UE, an HARQ timing relationship of uplink data in the uplink reference configuration, that is, the TDD configuration 0 is used as an HARQ timing relationship of uplink data. According to Table 2, for the TDD configuration 0, a downlink subframe 0 may schedule an uplink subframe 4 (n2 + k2 = 0 + 4 = 4) and an uplink subframe 7 (n2 + k2= 1 + 6 = 7), a downlink subframe 1 may schedule the uplink subframe 7 and an uplink subframe 8, a downlink subframe 5 may schedule an uplink subframe 9 and a subframe 2 of a next radio frame, and a downlink subframe 6 may schedule a subframe 2 and a subframe 3 of a next radio frame; and for the TDD configuration 6, a subframe 4 and a subframe 7 are both uplink subframes and are both scheduled by the downlink subframe 0; therefore, the UL Index field needs to exist, to indicate which one or two of the two subframes is or are scheduled.

In a second case, an uplink reference configuration is a TDD configuration 0, and information notified by using a PDCCH is also the TDD configuration 0. Similarly, Table 1 is searched, and in configuration information (the TDD configuration 0) notified by using the PDCCH, there are six effective uplink subframes, more than downlink subframes whose quantity is four; therefore, the UL Index field should exist, to indicate which one or two of the two subframes is or are scheduled.

In a third case, an uplink reference configuration is a TDD configuration 0, and information notified by using a PDCCH is a TDD configuration 3. For UE, an HARQ timing relationship of uplink data in the TDD configuration 0 is used as an HARQ timing relationship of uplink data. Table 2 is searched; in the TDD configuration 0, a downlink subframe 0 may schedule an uplink subframe 4 and subframe 7, a downlink subframe 1 may schedule an uplink subframe 7 and an uplink subframe 8, a downlink subframe 5 may schedule an uplink subframe 9 and an uplink subframe 2 of a next radio frame, and a downlink subframe 6 may schedule an uplink subframe 2 and subframe 3 of a next radio frame; and in the TDD configuration 3, a subframe 2 and a subframe 3 are both uplink subframes, and both of the subframe 2 and the subframe 3 are scheduled by the downlink subframe 6; therefore, the UL Index field still needs to exist, to indicate which one or two of the two subframes is or are scheduled.

Therefore, if the configuration in the PDCCH is any one of the TDD configurations 0, 3, and 6, the UL Index field exists and the DAI field may not exist.

If the DAI field does not exist, it should be noted that, the UE needs to feed back corresponding HARQ-ACK information on the PUSCH according to a maximum value M of a quantity of subframes that corresponds to the downlink reference configuration in Table 3 and that needs to be fed back.

The following are described by using an example. When the downlink reference configuration is a TDD configuration 2, four downlink subframes 8, 7, 4, and 6 all need to be fed back in one uplink subframe. According to Table 3, HARQ-ACK information of the downlink subframes {8, 7, 4, 6} needs to be fed back by using the PUSCH sent in the subframe 2. The DAI field does not exist, and therefore, the UE feeds back the corresponding HARQ-ACK information according to the maximum value M of the quantity of subframes that need to be fed back in Table 2. For example, when the downlink reference configuration is 2, the UE always sends a feedback in an uplink subframe 2 according to M = 4; and when the downlink reference configuration is 1, the uplink subframe 2 corresponds to the downlink subframes {7, 6}, and therefore, the UE always sends a feedback in an uplink subframe 1 according to M = 2.

Scenario 2: How to indicate information about a scheduled uplink subframe if a DAI field exists and a UL Index field may not exist.

In a first case, when information notified by using a PDCCH is any one of TDD configurations 1, 2, 4, and 5, the DAI field exists. When an uplink reference configuration is a TDD configuration 0, an uplink subframe scheduled by using a DCI format 0/4 is by default a corresponding uplink subframe that is obtained when the TDD configuration is 0 and when an LSB of the UL Index is set to 1.

When the information notified by using the PDCCH is any one of the TDD configurations 1, 2, 4, and 5, and an uplink reference configuration of UE is the TDD configuration 0, for the UE, according to the TDD configuration 0 in Table 2, a downlink subframe 0 may schedule a subframe 4 (n2 + k2 = 0 + 4 = 4) and a subframe 7 (n2 + k2 = 1 + 6 = 7), a downlink subframe 1 may schedule a subframe 7 and a subframe 8, a downlink subframe 5 may schedule a subframe 9 and a subframe 2 of a next radio frame, and a downlink subframe 6 may schedule a subframe 2 and a subframe 3 of a next radio frame. In a general case, two bits are used for representation, where a most significant bit MSB (Most significant bit) represents the former subframe of the two subframes, and a least significant bit LSB (least significant bit) represents the latter subframe of the two subframes. For example, if an LSB of a UL Index in the DCI format 0/4 in a downlink subframe 0 is set to 1, it means that the subframe 7 is scheduled. In the TDD configurations 1, 2, 4, and 5, a quantity of effective downlink subframes is greater than a quantity of uplink subframes. HARQ-ACK information of multiple downlink subframes need to be fed back in one uplink subframe, so that the DAI field may exist, so as to reduce overheads of the HARQ-ACK.

In this case, which uplink subframe is scheduled by the downlink subframe should be clearly stipulated. For example, when the information notified by using the PDCCH is the TDD configuration 1, the downlink subframe 0 schedules the subframe 7, the downlink subframe 1 schedules the subframe 8, the downlink subframe 5 schedules the subframe 2 of the next radio frame, and the downlink subframe 6 schedules the subframe 3 of the next radio frame; when the information notified by using the PDCCH is the TDD configuration 2, the downlink subframe 0 schedules the subframe 7, and the downlink subframe 5 schedules the subframe 2 of the next radio frame. When the information notified by using the PDCCH is the TDD configuration 4, the downlink subframe 5 schedules the subframe 2 of the next radio frame, and the downlink subframe 6 schedules the subframe 3 of the next radio frame; when the information notified by using the PDCCH is the TDD configuration 5, the downlink subframe 5 schedules the subframe 2 of the next radio frame, that is, a corresponding uplink subframe obtained when the LSB of the UL Index is set to 1.

### Embodiment 3

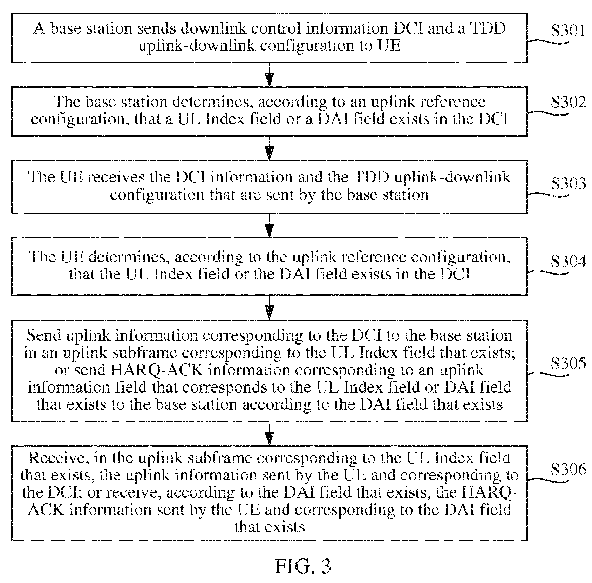

As shown in FIG. 3, FIG. 3 is a flowchart of an uplink information sending method and receiving method according to still another embodiment of the present invention. A main difference between this embodiment and Embodiment 2 is that in this embodiment, UE and a base station determine, according to an uplink reference configuration, whether a UL Index field or a DAI field exists. The method specifically includes:
Step S301: A base station sends DCI and a TDD uplink-downlink configuration to UE.

Step S302: The base station determines, according to the TDD uplink-downlink configuration, that a UL Index field or a DAI field exists in the DCI.

The TDD uplink-downlink configuration includes an uplink reference configuration, where the uplink reference configuration is carried in RRC signaling by the base station and is delivered to the UE. This embodiment uses an example in which a field existing in the DCI is determined according to the uplink reference configuration. Steps of determining a field are described in detail in the following.

Step S303: The UE receives the DCI information and the TDD uplink-downlink configuration that are sent by the base station.

Step S304: The UE determines, according to an uplink reference configuration in the TDD uplink-downlink configuration, that the UL Index field or the DAI field exists in the DCI.

Step S305: The UE sends uplink information corresponding to the UL Index field or DAI field that exists to the base station according to the UL Index field or DAI field that exists.

Step S306: The base station schedules a subframe corresponding to the received uplink information.

For step S304, the performing, by the UE, determining according to the TDD uplink-downlink configuration specifically includes: if the uplink reference configuration is a TDD configuration 0, determining, by the UE, that the UL Index field exists in the DCI; or if the uplink reference configuration is any one of TDD configurations 1, 2, 3, 4, 5 and 6, determining, by the UE, that the DAI field exists in the DCI.

Preferably, after the received uplink reference configuration takes effect, the UE determines the UL Index field or the DCI field. Before step S304, the method further includes:
sending, by the base station, signaling that includes an effect-taking time of the uplink reference configuration to the UE, where the signaling may be higher layer signaling, such as RRC signaling; or may be physical layer signaling, such as information notified by using a PDCCH.

The UE determines, according to the effect-taking time of the uplink reference configuration, whether the uplink reference configuration takes effect, and performs step S304 when and after the configuration takes effect.

For step 305, specifically, the UE determines an HARQ timing relationship of uplink data according to the uplink reference configuration, and determines, according to the determined timing relationship, a position of an uplink subframe that needs to be scheduled.

If it is determined that the UL Index field exists, step S305 is specifically: sending the uplink information corresponding to the DCI to the base station in the uplink subframe corresponding to the UL Index field that exists.

Further, if the UL Index field exists and the DAI field does not exist, this embodiment further includes a step of receiving, by the UE, a downlink reference configuration sent by the base station, where the downlink reference configuration may be carried in RRC signaling and sent to the UE, and then, the UE further needs to send, to the base station, HARQ-ACK information corresponding to a maximum value of a quantity of subframes that corresponds to the downlink reference configuration and that needs to be fed back.

If it is determined that the DAI field exists, step S305 is specifically: sending, by the UE, HARQ-ACK information corresponding to the DAI field that exists to the base station.

In addition, if it is determined that the DAI field exists, when the uplink reference configuration is a TDD configuration 0, the UE further determines that an uplink subframe corresponding to the DCI field is a corresponding uplink subframe that is obtained when the TDD configuration is 0 and when an LSB of the UL Index field is set to 1.

The uplink reference configuration according to which whether the UL Index field or the DAI field in the DCI exists is determined is one of seven configurations in Table 1. The uplink reference configuration is mainly used to determine an HARQ timing relationship of uplink data. The uplink reference configuration is carried in the RRC signaling. The base station and the UE can determine, only when and after the uplink reference configuration takes effect, whether the UL Index or the DAI field in the DCI exists.

A beneficial effect brought by this embodiment is: the present invention is not limited by a performance and dependability of the PDCCH, it is determined semi-statically whether the UL Index field or the DAI field exists, and there is a relatively high probability that the UL Index field functions.

For example, when the uplink reference configuration is the TDD configuration 0 and the configuration in the PDCCH is also the TDD configuration 0, the method is the same as that in a system before R12. However, when the configuration in the PDCCH is any one of the TDD configurations 1, 2, 3, 4, 5, and 6, because the DAI field does not exist, a user needs to feed back corresponding HARQ-ACK information according to a maximum value M of a quantity of subframes that corresponds to the downlink reference configuration in Table 2 and that needs to be fed back.

### Embodiment 4

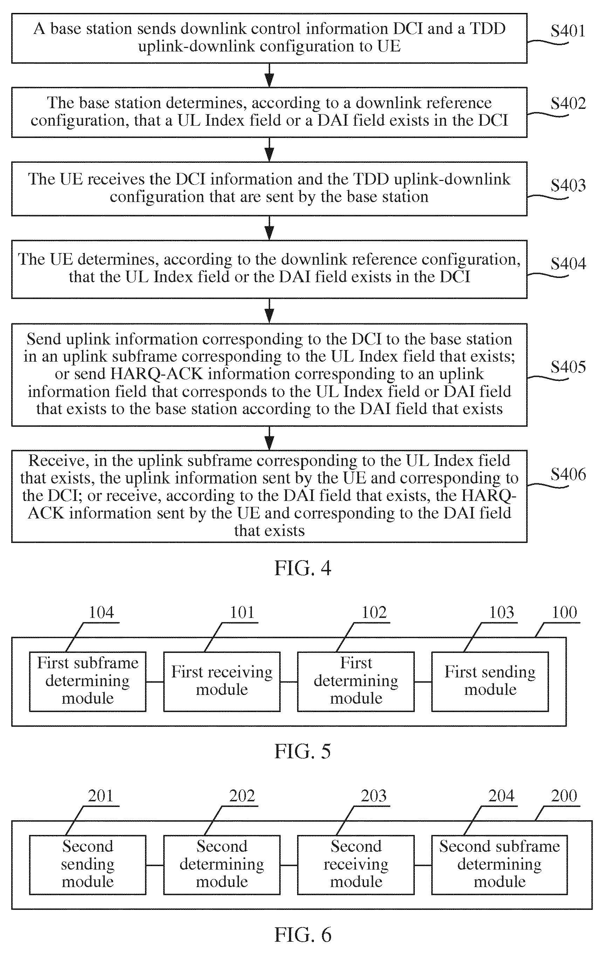

As shown in FIG. 4, FIG. 4 is a flowchart of an uplink information sending method and receiving method according to yet another embodiment of the present invention. A main difference between this embodiment and Embodiment 3 is that in this embodiment, UE and a base station determine, according to a downlink reference configuration, whether a UL Index field or a DAI field exists. The method specifically includes:
Step S401: A base station sends downlink control information DCI and a TDD uplink-downlink configuration to UE.

Step S402: The base station determines, according to the TDD uplink-downlink configuration, that a UL Index field or a DAI field exists in the DCI.

The TDD uplink-downlink configuration includes a downlink reference configuration, where the downlink reference configuration is carried in RRC signaling by the base station and is delivered to the UE. This embodiment uses an example in which a field existing in the DCI is determined according to the downlink reference configuration. Steps of determining a field are described in detail in the following.

Step S403: The UE receives the DCI information and the TDD uplink-downlink configuration that are sent by the base station.

Step S404: The UE determines, according to a downlink reference configuration in the TDD uplink-downlink configuration, that the UL Index field or the DAI field exists in the DCI.

Step S405: The UE sends uplink information corresponding to the UL Index field or DAI field that exists to the base station according to the UL Index field or DAI field that exists.

Step S406: The base station schedules a subframe corresponding to the received uplink information.

For step S404, the performing, by the UE, determining according to the TDD uplink-downlink configuration specifically includes: if the downlink reference configuration is a TDD configuration 0, determining, by the UE, that the UL Index field exists in the DCI; or if the downlink reference configuration is any one of TDD configurations 1, 2, 3, 4, 5 and 6, determining, by the UE, that the DAI field exists in the DCI.

Preferably, after the received uplink reference configuration takes effect, the UE determines the UL Index field or the DCI field. Before step S304, the method further includes:
sending, by the base station, signaling that includes an effect-taking time of the downlink reference configuration to the UE, where the signaling may be higher layer signaling, such as RRC signaling; or may be physical layer signaling, such as information notified by using a PDCCH.

The UE determines, according to the effect-taking time of the downlink reference configuration, whether the uplink reference configuration takes effect, and performs step S404 when and after the configuration takes effect.

In this embodiment, the downlink reference configuration is also one of seven configurations in Table 1. The downlink reference configuration is mainly used for downlink HARQ timing. The downlink reference configuration is carried in the RRC signaling, and only when and after the downlink reference configuration takes effect, can be used to determine whether the UL Index or the DAI field in the DCI exists.

A beneficial effect of this embodiment is: it is not limited by a performance and dependability of the PDCCH, it is determined semi-statically whether the UL Index or the DAI field exists, and there is a relatively high probability that the DAI functions.

In addition, if the DAI field does not exist, the UE needs to feed back corresponding HARQ-ACK information according to a maximum value M of a quantity of subframes that corresponds to the downlink reference configuration and that needs to be fed back.

For example, when the uplink reference configuration is the TDD configuration 0 and the configuration in the PDCCH is also the TDD configuration 0, the method is the same as that in a system before R12. However, when the configuration in the PDCCH is any one of the TDD configurations 1, 2, 3, 4, 5, and 6, because the DAI field does not exist, a user needs to feed back corresponding HARQ-ACK information according to a maximum value M of a quantity of subframes that corresponds to the downlink reference configuration in Table 2 and that needs to be fed back.

### Embodiment 5

As shown in FIG. 5, FIG. 5 is a schematic structural diagram of an uplink information sending apparatus according to still another embodiment of the present invention. The uplink information sending apparatus 100 includes: a first receiving module 101, a first determining module 102, and a first sending module 103. The first receiving module 101 is configured to receive DCI and a TDD uplink-downlink configuration that are sent by a base station; the first determining module 102 is connected to the first receiving module 101, and is configured to determine, according to the TDD uplink-downlink configuration, that a UL Index field or a DAI field exists in the DCI, where the TDD uplink-downlink configuration includes a configuration in a PDCCH or an uplink reference configuration; and the first sending module 103 is connected to the first determining module 102, and is configured to: send uplink information corresponding to the DCI to the base station according to the UL Index field or DAI field that exists and in an uplink subframe corresponding to the UL Index field that exists; or send HARQ-ACK information corresponding to the DAI field that exists to the base station according to the DAI field that exists.

With reference to Embodiment 3, the first determining module 102 is specifically configured to: when the configuration in the PDCCH is any one of TDD configurations 0, 3, and 6, determine that the UL Index field exists in the DCI; when the configuration in the PDCCH is any one of TDD configurations 1, 2, 4, and 5, determine that the DAI field exists in the DCI; when the uplink reference configuration is a TDD configuration 0, determine that the UL Index field exists in the DCI; or when the uplink reference configuration is any one of TDD configurations 1, 2, 3, 4, 5, and 6, determine that the DAI field exists in the DCI.

Further, the first receiving module 101 is further configured to receive the uplink reference configuration sent by the base station and carried in RRC signaling or SIB 1 signaling. The first receiving module 101 is further configured to receive a downlink reference configuration sent by the base station; and the first sending module 103 is further configured to send, to the base station in the uplink subframe corresponding to the UL Index field that exists, HARQ-ACK information corresponding to a maximum value of a quantity of subframes that corresponds to the downlink reference configuration and that needs to be fed back.

Preferably, this embodiment further includes: a first subframe determining module 104, configured to: when the uplink reference configuration is a TDD configuration 0, determine that an uplink subframe corresponding to the DCI is a corresponding uplink subframe that is obtained when the TDD configuration is 0 and when an LSB of the UL Index field is set to 1.

Further, the first determining module 102 is further configured to determine an effect-taking time of the TDD uplink-downlink configuration sent by the base station; and determine, according to the effective TDD uplink-downlink configuration, that the UL Index field or the DAI field exists in the DCI.

### Embodiment 6

As shown in FIG. 6, FIG. 6 is a schematic structural diagram of an uplink data receiving apparatus according to a further embodiment of the present invention. The uplink data receiving apparatus 200 includes: a second sending module 201, a second determining module 202, and a second receiving module 203.

The second sending module 201 is configured to send downlink control information DCI and a TDD uplink-downlink configuration to UE; the second determining module 202 is connected to the second sending module 201, and is configured to determine, according to the TDD uplink-downlink configuration, that a UL Index field or a DAI field exists in the DCI, where the TDD uplink-downlink configuration includes a configuration in a PDCCH or an uplink reference configuration; and the second receiving module 203 is connected to the second determining module 202, and is configured to receive, in an uplink subframe corresponding to the UL Index field that exists, uplink information sent by the UE and corresponding to the DCI; or receive, according to the DAI field that exists, HARQ-ACK information sent by the UE and corresponding to the DAI field that exists.

With reference to Embodiment 4, the second determining module 202 is specifically configured to: when the configuration in the PDCCH is any one of TDD configurations 0, 3, and 6, determine that the UL Index field exists in the DCI; when the configuration in the PDCCH is any one of TDD configurations 1, 2, 4, and 5, determine, by the UE, that the DAI field exists in the DCI; when the uplink reference configuration is a TDD configuration 0, determine that the UL Index field exists in the DCI; or when the uplink reference configuration is any one of TDD configurations 1, 2, 3, 4, 5, and 6, determine that the DAI field exists in the DCI.

The second sending module 201 is further configured to add the uplink reference configuration to RRC signaling or SIB signaling and send the RRC signaling or the SIB1 signaling, to the base station. The second sending module 201 is further configured to send a downlink reference configuration to the UE; and the second receiving module 203 is further configured to receive, in the uplink subframe corresponding to the UL Index field that exists, HARQ-ACK information corresponding to a maximum value of a quantity of subframes that corresponds to the downlink reference configuration sent by the UE and that needs to be fed back.

Preferably, the apparatus further includes: a second subframe determining module 204, configured to: when the uplink reference configuration is a TDD configuration 0, determine that an uplink subframe corresponding to the DCI is a corresponding uplink subframe that is obtained when the TDD configuration is 0 and when an LSB of the UL Index is set to 1.

In another possible implementation manner, the second determining module 202 is further configured to determine an effect-taking time of the TDD uplink-downlink configuration; and determine, according to the effective TDD uplink-downlink configuration, that the UL Index field or the DAI field exists in the DCI.

### Embodiment 7

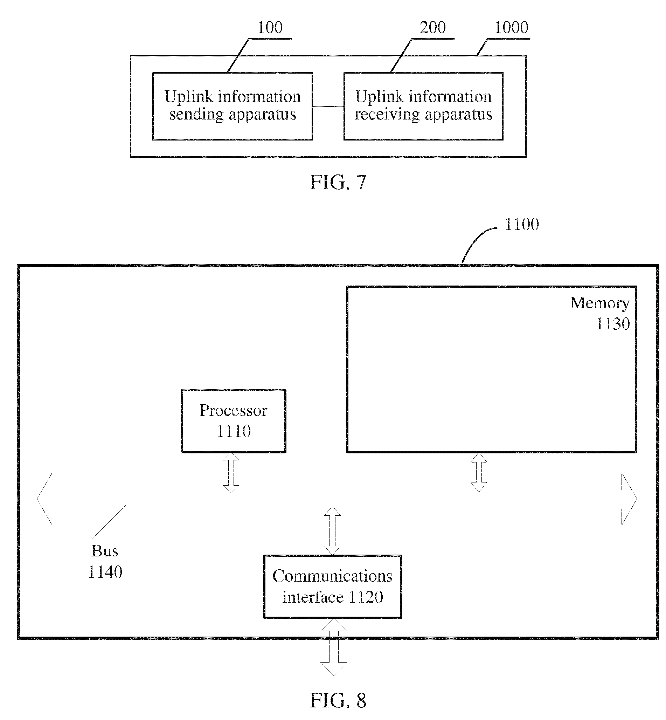

As shown in FIG. 7, FIG. 7 is a schematic structural diagram of an uplink data communications system according to a further embodiment of the present invention. The uplink data communications system 1000 includes: the uplink information sending apparatus 100 in Embodiment 5 and the uplink information receiving apparatus 200 in Embodiment 6.

### Embodiment 8

FIG. 8 is a structural block diagram of a network device according to another embodiment of the present invention. The network device 1100 may be a host server having a computing capability, a personal computer PC, or a portable computer or terminal, or the like. A specific embodiment of the present invention does not limit a specific implementation of a computing node.

The network device 1100 includes a processor (processor) 1110, a communications interface (Communications Interface) 1120, a memory (memory) 1130, and a bus 1140, where the processor 1110, the communications interface 1120, and the memory 1130 communicate with each other by using the bus 1140.

The communications interface 1120 is configured to communicate with a network device, where the network device includes a virtual machine management center, a shared memory, and the like.

The processor 1110 is configured to execute a program. The processor 1110 may a central processing unit CPU, an application specific integrated circuit ASIC (Application Specific Integrated Circuit), or one or more integrated circuits configured to implement the embodiments of the present invention.

The memory 1130 is configured to store a file. The memory 1130 may include a high-speed RAM memory, or may also include a non-volatile memory (non-volatile memory), for example, at least one magnetic disk storage. The memory 1130 may be a memory array. The memory 1130 may also be divided into blocks, and the blocks may form a virtual volume according to a certain rule.

In a possible implementation manner, the foregoing program may be program code including a computer operation instruction. The program may be specifically used to:
receive downlink control information DCI and a time division duplexing TDD uplink-downlink configuration that are sent by a base station;
determine, according to the TDD uplink-downlink configuration, that an uplink index UL Index field or a downlink assignment index DAI field exists in the DCI, where the TDD uplink-downlink configuration includes a configuration in a physical downlink control channel PDCCH or an uplink reference configuration; and
send uplink information corresponding to the DCI to the base station according to the UL Index field that exists and in an uplink subframe corresponding to the UL Index field that exists; or send HARQ-ACK information corresponding to the DAI field that exists to the base station according to the DAI field that exists.

For the uplink information sending method, in a possible implementation manner, the determining, according to the TDD uplink-downlink configuration, that a UL Index field or a DAI field exists in the DCI specifically includes: when the configuration in the PDCCH is any one of TDD configurations 0, 3, and 6, determining that the UL Index field exists in the DCI.

For the uplink information sending method, in a possible implementation manner, the determining, according to the TDD uplink-downlink configuration, that a UL Index field or a DAI field exists in the DCI specifically includes: when the configuration in the PDCCH is any one of TDD configurations 1, 2, 4, and 5, determining that the DAI field exists in the DCI.

For the uplink information sending method, in a possible implementation manner, the determining, according to the TDD uplink-downlink configuration, that a UL Index field or a DAI field exists in the DCI specifically includes: when the uplink reference configuration is a TDD configuration 0, determining that the UL Index field exists in the DCI.

For the uplink information sending method, in a possible implementation manner, the determining, according to the TDD uplink-downlink configuration, that a UL Index field or a DAI field exists in the DCI specifically includes: when the uplink reference configuration is any one of TDD configurations 1, 2, 3, 4, 5, and 6, determining that the DAI field exists in the DCI.

For the uplink information sending method, in a possible implementation manner, the receiving a TDD uplink-downlink configuration sent by a base station specifically includes:
receiving the uplink reference configuration sent by the base station and carried in radio resource control RRC signaling or system information block SIB1 signaling.

For the uplink information sending method, in a possible implementation manner, the method further includes:
receiving a downlink reference configuration sent by the base station; and
sending, to the base station in the uplink subframe corresponding to the UL Index field that exists, HARQ-ACK information corresponding to a maximum value of a quantity of subframes that corresponds to the downlink reference configuration and that needs to be fed back.

For the uplink information sending method, in a possible implementation manner, the method further includes:
when the uplink reference configuration is a TDD configuration 0, determining that an uplink subframe corresponding to the DCI is a corresponding uplink subframe that is obtained when the TDD configuration is 0 and when an LSB of the UL Index field is set to 1.

For the uplink information sending method, in a possible implementation manner, the determining, according to the TDD uplink-downlink configuration, that a UL Index field or a DAI field exists in the DCI further includes:
determining an effect-taking time of the TDD uplink-downlink configuration; and
the determining, according to the TDD uplink-downlink configuration, that a UL Index field or a DAI field exists in the DCI specifically includes:
   determining, according to the effective TDD uplink-downlink configuration, that the UL Index field or the DAI field exists in the DCI.

The program may be further used to:
send DCI and a TDD uplink-downlink configuration to UE;
determine, according to the TDD uplink-downlink configuration, that a UL Index field or a DAI field exists in the DCI, where the TDD uplink-downlink configuration includes a configuration in a PDCCH or an uplink reference configuration; and
receive, according to the UL Index field that exists and in an uplink subframe corresponding to the UL Index field that exists, uplink information sent by the UE and corresponding to the DCI; or receive, according to the DAI field that exists, HARQ-ACK information sent by the UE and corresponding to the DAI field that exists.

For the uplink information receiving method, in a possible implementation manner, the determining, according to the TDD uplink-downlink configuration, that a UL Index field or a DAI field exists in the DCI specifically includes: when the configuration in the PDCCH is any one of TDD configurations 0, 3, and 6, determining that the UL Index field exists in the DCI.

For the uplink information receiving method, in a possible implementation manner, the determining, by a base station according to the TDD uplink-downlink configuration, that a UL Index field or a DAI field exists in the DCI specifically includes: when the configuration in the PDCCH is any one of TDD configurations 1, 2, 4, and 5, determining, by the UE, that the DAI field exists in the DCI.

For the uplink information receiving method, in a possible implementation manner, the determining, according to the TDD uplink-downlink configuration, that a UL Index field or a DAI field exists in the DCI specifically includes: when the uplink reference configuration is a TDD configuration 0, determining that the UL Index field exists in the DCI.

For the uplink information receiving method, in a possible implementation manner, the determining, according to the TDD uplink-downlink configuration, that a UL Index field or a DAI field exists in the DCI specifically includes: when the uplink reference configuration is any one of TDD configurations 1, 2, 3, 4, 5, and 6, determining that the DAI field exists in the DCI.

For the uplink information receiving method, in a possible implementation manner, the sending a TDD uplink-downlink configuration to UE specifically includes:
adding the uplink reference configuration to RRC signaling or SIB1 signaling and sending the RRC signaling or the SIB 1 signaling to the base station.

For the uplink information receiving method, in a possible implementation manner, the method further includes:
sending a downlink reference configuration to the UE; and
receiving, in the uplink subframe corresponding to the UL Index field that exists, HARQ-ACK information corresponding to a maximum value of a quantity of subframes that corresponds to the downlink reference configuration sent by the UE and that needs to be fed back.

For the uplink information receiving method, in a possible implementation manner, the determining that the DAI field exists in the DCI further includes:
when the uplink reference configuration is a TDD configuration 0, determining that an uplink subframe corresponding to the DCI is a corresponding uplink subframe that is obtained when the TDD configuration is 0 and when an LSB of the UL Index is set to 1.

For the uplink information receiving method, in a possible implementation manner, the determining, according to the TDD uplink-downlink configuration, that a UL Index field or a DAI field exists in the DCI further includes:
determining an effect-taking time of the TDD uplink-downlink configuration; and
the determining, according to the TDD uplink-downlink configuration, that a UL Index field or a DAI field exists in the DCI specifically includes:
   determining, according to the effective TDD uplink-downlink configuration, that the UL Index field or the DAI field exists in the DCI.

A person of ordinary skill in the art may be aware that, exemplary units and algorithm steps in the embodiments described in this specification may be implemented by electronic hardware or a combination of computer software and electronic hardware. Whether the functions are implemented by hardware or software depends on particular applications and design constraint conditions of the technical solutions. A person skilled in the art may select different methods to implement the described functions for a particular application, but it should not be considered that the implementation goes beyond the scope of the present invention.

If the functions are implemented in a form of computer software and sold or used as an independent product, it can be deemed to some extent that all or some of the technical solutions of the present invention (for example, the part contributing to the prior art) are implemented in a form of a computer software product. The computer software product is generally stored in a computer readable non-volatile storage medium and includes several instructions for instructing a computer device (which may be a personal computer, a server, or a network device, and the like) to perform all or some of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

### Practicality

In an uplink information sending method and apparatus, receiving method and apparatus, and communications system provided in the embodiments of the present invention, it is determined, according to TDD configuration information, whether a UL Index field or a DAI field exists in DAI, which can ensure that the UL Index field or the DAI field functions normally, and further can reduce an increase in downlink control signaling overheads or uplink control signaling overheads and improve a system capacity.

## Claims

1. An uplink information sending method, comprising:
receiving downlink control information DCI and a time division duplexing TDD uplink-downlink configuration that are sent by a base station;
determining, according to the TDD uplink-downlink configuration, that an uplink index UL Index field or a downlink assignment index DAI field exists in the DCI, wherein the TDD uplink-downlink configuration comprises a configuration in a physical downlink control channel PDCCH or an uplink reference configuration; and
sending uplink information corresponding to the DCI to the base station according to the UL Index field that exists and in an uplink subframe corresponding to the UL Index field that exists; or sending HARQ-ACK information corresponding to the DAI field that exists to the base station according to the DAI field that exists.

2. The uplink information sending method according to claim 1, wherein the determining, according to the TDD uplink-downlink configuration, that a UL Index field or a DAI field exists in the DCI specifically comprises: when the configuration in the PDCCH is any one of TDD configurations 0, 3, and 6, determining that the UL Index field exists in the DCI.

3. The uplink information sending method according to claim 1, wherein the determining, according to the TDD uplink-downlink configuration, that a UL Index field or a DAI field exists in the DCI specifically comprises: when the configuration in the PDCCH is any one of TDD configurations 1, 2, 4, and 5, determining that the DAI field exists in the DCI.

4. The uplink information sending method according to claim 1, wherein the determining, according to the TDD uplink-downlink configuration, that a UL Index field or a DAI field exists in the DCI specifically comprises: when the uplink reference configuration is a TDD configuration 0, determining that the UL Index field exists in the DCI.

5. The uplink information sending method according to claim 1, wherein the determining, according to the TDD uplink-downlink configuration, that a UL Index field or a DAI field exists in the DCI specifically comprises: when the uplink reference configuration is any one of TDD configurations 1, 2, 3, 4, 5, and 6, determining that the DAI field exists in the DCI.

6. The uplink information sending method according to claim 1, wherein the receiving a TDD uplink-downlink configuration sent by a base station specifically comprises:
receiving the uplink reference configuration sent by the base station and carried in radio resource control RRC signaling or system information block SIB1 signaling.

7. The uplink information sending method according to claim 2 or 4, further comprising:
receiving a downlink reference configuration sent by the base station; and
sending, to the base station in the uplink subframe corresponding to the UL Index field that exists, HARQ-ACK information corresponding to a maximum value of a quantity of subframes that corresponds to the downlink reference configuration and that needs to be fed back.

8. The uplink information sending method according to claim 3 or 5, further comprising:
when the uplink reference configuration is a TDD configuration 0, determining that an uplink subframe corresponding to the DCI is a corresponding uplink subframe that is obtained when the TDD configuration is 0 and when an LSB of the UL Index field is set to 1.

9. The uplink information sending method according to any one of claims 1 to 8, wherein the determining, according to the TDD uplink-downlink configuration, that a UL Index field or a DAI field exists in the DCI further comprises:
determining an effect-taking time of the TDD uplink-downlink configuration; and
the determining, according to the TDD uplink-downlink configuration, that a UL Index field or a DAI field exists in the DCI specifically comprises:
determining, according to the effective TDD uplink-downlink configuration, that the UL Index field or the DAI field exists in the DCI.

10. An uplink information receiving method, comprising:
sending DCI and a TDD uplink-downlink configuration to UE;
determining, according to the TDD uplink-downlink configuration, that a UL Index field or a DAI field exists in the DCI, wherein the TDD uplink-downlink configuration comprises a configuration in a PDCCH or an uplink reference configuration; and
receiving, according to the UL Index field that exists and in an uplink subframe corresponding to the UL Index field that exists, uplink information sent by the UE and corresponding to the DCI; or receiving, according to the DAI field that exists, HARQ-ACK information sent by the UE and corresponding to the DAI field that exists.

11. The uplink information receiving method according to claim 10, wherein the determining, according to the TDD uplink-downlink configuration, that a UL Index field or a DAI field exists in the DCI specifically comprises: when the configuration in the PDCCH is any one of TDD configurations 0, 3, and 6, determining that the UL Index field exists in the DCI.

12. The uplink information receiving method according to claim 10, wherein the determining, by a base station according to the TDD uplink-downlink configuration, that a UL Index field or a DAI field exists in the DCI specifically comprises: when the configuration in the PDCCH is any one of TDD configurations 1, 2, 4, and 5, determining, by the UE, that the DAI field exists in the DCI.

13. The uplink information receiving method according to claim 10, wherein the determining, according to the TDD uplink-downlink configuration, that a UL Index field or a DAI field exists in the DCI specifically comprises: when the uplink reference configuration is a TDD configuration 0, determining that the UL Index field exists in the DCI.

14. The uplink information receiving method according to claim 10, wherein the determining, according to the TDD uplink-downlink configuration, that a UL Index field or a DAI field exists in the DCI specifically comprises: when the uplink reference configuration is any one of TDD configurations 1, 2, 3, 4, 5, and 6, determining that the DAI field exists in the DCI.

15. The uplink information receiving method according to claim 10, wherein the sending DCI and a TDD uplink-downlink configuration to UE specifically comprises:
adding the uplink reference configuration to RRC signaling or SIB1 signaling and sending the RRC signaling or the SIB1 signaling to the UE.

16. The uplink information receiving method according to claim 11 or 13, further comprising:
sending a downlink reference configuration to the UE; and
receiving, in the uplink subframe corresponding to the UL Index field that exists, HARQ-ACK information corresponding to a maximum value of a quantity of subframes that corresponds to the downlink reference configuration sent by the UE and that needs to be fed back.

17. The uplink information receiving method according to claim 12 or 14, wherein the determining that the DAI field exists in the DCI further comprises:
when the uplink reference configuration is a TDD configuration 0, determining that an uplink subframe corresponding to the DCI is a corresponding uplink subframe that is obtained when the TDD configuration is 0 and when an LSB of the UL Index is set to 1.

18. The uplink information receiving method according to any one of claims 10 to 17, wherein the determining, according to the TDD uplink-downlink configuration, that a UL Index field or a DAI field exists in the DCI further comprises:
determining an effect-taking time of the TDD uplink-downlink configuration; and
the determining, according to the TDD uplink-downlink configuration, that a UL Index field or a DAI field exists in the DCI specifically comprises:
determining, according to the effective TDD uplink-downlink configuration, that the UL Index field or the DAI field exists in the DCI.

19. An uplink information sending apparatus, comprising:
a first receiving module, configured to receive DCI and a TDD uplink-downlink configuration that are sent by a base station;
a first determining module, connected to the first receiving module and configured to determine, according to the TDD uplink-downlink configuration, that a UL Index field or a DAI field exists in the DCI, wherein the TDD uplink-downlink configuration comprises a configuration in a PDCCH or an uplink reference configuration; and
a first sending module, connected to the first determining module and configured to: send uplink information corresponding to the DCI to the base station according to the UL Index field or DAI field that exists and in an uplink subframe corresponding to the UL Index field that exists; or send HARQ-ACK information corresponding to the DAI field that exists to the base station according to the DAI field that exists.

20. The uplink information sending apparatus according to claim 19, wherein the first determining module is specifically configured to: when the configuration in the PDCCH is any one of TDD configurations 0, 3, and 6, determine that the UL Index field exists in the DCI.

21. The uplink information sending apparatus according to claim 19, wherein the first determining module is specifically configured to: when the configuration in the PDCCH is any one of TDD configurations 1, 2, 4, and 5, determine that the DAI field exists in the DCI.

22. The uplink information sending apparatus according to claim 19, wherein the first determining module is specifically configured to: when the uplink reference configuration is a TDD configuration 0, determine that the UL Index field exists in the DCI.

23. The uplink information sending apparatus according to claim 19, wherein the first determining module is specifically configured to: when the uplink reference configuration is any one of TDD configurations 1, 2, 3, 4, 5, and 6, determine that the DAI field exists in the DCI.

24. The uplink information sending apparatus according to claim 19, wherein the first receiving module is further configured to:
receive the uplink reference configuration sent by the base station and carried in RRC signaling or SIB 1 signaling.

25. The uplink information sending apparatus according to claim 20 or 22, wherein the first receiving module is further configured to receive a downlink reference configuration sent by the base station; and
the first sending module is further configured to send, to the base station in the uplink subframe corresponding to the UL Index field that exists, HARQ-ACK information corresponding to a maximum value of a quantity of subframes that corresponds to the downlink reference configuration and that needs to be fed back.

26. The uplink information sending apparatus according to claim 21 or 23, further comprising:
a first subframe determining module, configured to: when the uplink reference configuration is a TDD configuration 0, determine that an uplink subframe corresponding to the DCI is a corresponding uplink subframe that is obtained when the TDD configuration is 0 and when an LSB of the UL Index field is set to 1.

27. The uplink information sending apparatus according to any one of claims 19 to 28, wherein the first determining module is further configured to determine an effect-taking time of the TDD uplink-downlink configuration sent by the base station; and determine, according to the effective TDD uplink-downlink configuration, that the UL Index field or the DAI field exists in the DCI.

28. An uplink information receiving apparatus, comprising:
a second sending module, configured to send DCI and a TDD uplink-downlink configuration to UE;
a second determining module, connected to the second sending module and configured to determine, according to the TDD uplink-downlink configuration, that a UL Index field or a DAI field exists in the DCI, wherein the TDD uplink-downlink configuration comprises a configuration in a PDCCH or an uplink reference configuration; and
a second receiving module, connected to the second determining module and configured to receive, in an uplink subframe corresponding to the UL Index field that exists, uplink information sent by the UE and corresponding to the DCI; or receive, according to the DAI field that exists, HARQ-ACK information sent by the UE and corresponding to the DAI field that exists.

29. The uplink information receiving apparatus according to claim 28, wherein the second determining module is specifically configured to: when the configuration in the PDCCH is any one of TDD configurations 0, 3, and 6, determine that the UL Index field exists in the DCI.

30. The uplink information receiving apparatus according to claim 28, wherein the second determining module is specifically configured to: when the configuration in the PDCCH is any one of TDD configurations 1, 2, 4, and 5, determine, by the UE, that the DAI field exists in the DCI.

31. The uplink information receiving apparatus according to claim 28, wherein the second determining module is specifically configured to: when the uplink reference configuration is a TDD configuration 0, determine that the UL Index field exists in the DCI.

32. The uplink information receiving apparatus according to claim 28, wherein the second determining module is specifically configured to: when the uplink reference configuration is any one of TDD configurations 1, 2, 3, 4, 5, and 6, determine that the DAI field exists in the DCI.

33. The uplink information receiving apparatus according to claim 28, wherein the second sending module is further configured to add the uplink reference configuration to RRC signaling or SIB1 signaling and send the RRC signaling or the SIB1 signaling to the base station.

34. The uplink information receiving apparatus according to claim 29 or 31, wherein the second sending module is further configured to send a downlink reference configuration to the UE; and
the second receiving module is further configured to receive, in the uplink subframe corresponding to the UL Index field that exists, HARQ-ACK information corresponding to a maximum value of a quantity of subframes that corresponds to the downlink reference configuration sent by the UE and that needs to be fed back.

35. The uplink information receiving apparatus according to claim 30 or 32, further comprising:
a second subframe determining module, configured to: when the uplink reference configuration is a TDD configuration 0, determine that an uplink subframe corresponding to the DCI is a corresponding uplink subframe that is obtained when the TDD configuration is 0 and when an LSB of the UL Index is set to 1.

36. The uplink information receiving apparatus according to claim 28 or 35, wherein the second determining module is further configured to determine an effect-taking time of the TDD uplink-downlink configuration; and determine, according to the effective TDD uplink-downlink configuration, that the UL Index field or the DAI field exists in the DCI.

37. An uplink information communications system, comprising the uplink information sending apparatus according to any one of claims 19 to 27 and the uplink information receiving apparatus according to any one of claims 28 to 36.
